Europäisches Patentamt

European Patent Office

Office européen des brevets

(19)

(11) Veröffentlichungsnummer: **0 289 897 B1**

(12) # EUROPÄISCHE PATENTSCHRIFT

(45) Veröffentlichungstag der Patentschrift: **02.10.91**

(51) Int. Cl.⁵: **F16C 33/66**

(21) Anmeldenummer: **88106576.7**

(22) Anmeldetag: **25.04.88**

(54) **Rotationslager für hohe Drehzahlen.**

(30) Priorität: **08.05.87 CH 1767/87**

(43) Veröffentlichungstag der Anmeldung:
**09.11.88 Patentblatt 88/45**

(45) Bekanntmachung des Hinweises auf die
Patenterteilung:
**02.10.91 Patentblatt 91/40**

(84) Benannte Vertragsstaaten:
**CH DE FR GB IT LI**

(56) Entgegenhaltungen:
**EP-A- 0 012 447          EP-A- 0 081 281**
**CH-A- 561 367            DE-A- 3 540 252**
**DE-B- 1 067 642          FR-A- 1 024 497**
**GB-A- 936 213            GB-A- 2 166 813**
**US-A- 2 271 820          US-A- 2 332 747**

(73) Patentinhaber: **MASCHINENFABRIK RIETER AG**
**Postfach 290**
**CH-8406 Winterthur(CH)**

(72) Erfinder: **Rohrer, Reinhard**
**Schützengasse 68**
**CH-2502 Biel(CH)**
Erfinder: **Buerki, Henri**
**Feldschützenweg 6a**
**CH-2504 Biel(CH)**
Erfinder: **Bischofberger, Jürg**
**Carl Spittelerstrasse 7**
**CH-8352 Elsau(CH)**
Erfinder: **Frey, Raymond**
**Birmensdorferstrasse 331**
**CH-8055 Zürich(CH)**

**Beschreibung**

Die vorliegende Erfindung bezieht sich auf ein Rotationslager für hohe Drehzahlen gemäss dem Oberbegriff des Patentanspruchs 1 und insbesondere auf den Schmiervorgang bei solchen Rotationslagern.

Durch die DE-A-35 40 252 und die CH-A-561 367 sind äussere Deckscheiben bekannt, durch welche das Eindringen von Schmutz und Fremdkörper ins Innere des Rotationslagers und das Entweichen von Schmiermittel aus dem Lager verhindert werden soll. Die bekannten Anordnungen weisen jedoch den Nachteil auf, dass die Schmiermittelverluste, vor allem im Betrieb, immer noch merklich sind.

Dieser Nachteil soll gemäss vorliegender Erfindung vermieden werden, welche die im kennzeichnenden Teil des Patentanspruchs 1 aufgeführten Merkmale aufweist. Durch die erfindungsgemässe Anordnung wird erreicht, dass im Betrieb das von den Wälzlagern wegspritzende Schmiermittel nicht an die Deckscheibe gelangt, sondern bereits vorher von den Schleuderringen erfasst und wieder zum Käfig und zu den Wälzkörpern zurückgeführt wird. Somit gelangt im Betrieb der Rotationslager praktisch kein Schmiermittel an die Deckscheiben und Verluste von solchem treten im Betrieb praktisch nicht auf.

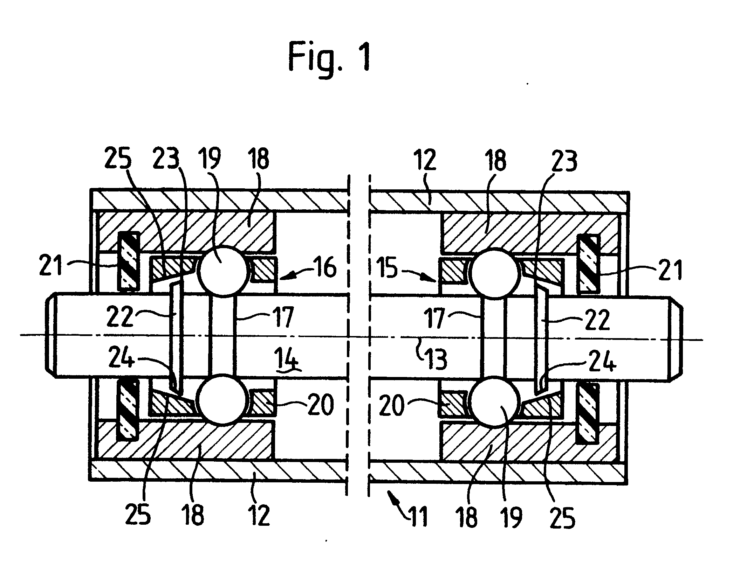

Die Erfindung sei nun anhand von Beispielen und der Zeichnung näher erläutert. In der letzteren sind die Figuren 1, 2 und 3 Längsschnitte, welche zur Erläuterung dreier verschiedener Ausführungsformen dienen. In den Figuren bezeichnen gleiche Bezugszahlen gleiche Teile.

Das in Figur 1 gezeigte Rotationslager 11 umfasst ein Gehäuse 12, in welchem eine um eine Rotationsachse 13 rotierbare Welle 14 in zwei Radial-Wälzlagern 15, 16 gelagert ist. Jedes der Lager 15, 16 besteht aus einer auf der Welle 14 angebrachten Rille 17, welche den Innenring desselben bildet, aus einem stillstehenden, mit dem Gehäuse 12 festen Aussenring 18, aus durch Kugeln 19 gebildeten Wälzkörpern und aus einem die letztern führenden Käfig 20.

In axialer Richtung, d.h. in Richtung der Achse 13 gesehen, sind ausserhalb jedes Lagers 15 und 16 Deckscheiben 21 vorhanden. Diese sind in den Aussenringen 18 fest eingebaut und der Mantelfläche der Welle 14 im Sinne einer bestmöglichen Abdichtung genau angepasst. Sie dienen als Abdichtungen gegen aussen, um das Eindringen Von Schmutz ins Innere des Rotationslagers 11 und das Entweichen von Schmiermittel nach aussen zu verhindern. Zusätzlich sind noch von der Welle 14 getragene und mit ihr feste Schleuderringe 22 vorgesehen. Bei rotierender Welle 14 wird auf diese Ringe 22 gelangendes Schmiermittel weggeschleudert, wobei dieses von der von der Aohse 13 am weitesten entfernten Kante, der aktiven Kante 23, weg erfolgt. Zum Bilden einer aktiven Kante 23 wird der Schleuderring 22 mit einer kegelstumpfförmigen Mantelfläche 24 versehen.

Im Betrieb des Rotationslagers 11, d.h. bei Rotation der Welle 14, wird das im Innern vorhandene, nicht gezeichnete Schmiermittel, z.B. Oel, heftig bewegt. Dabei wird solches unter anderem gegen die Mitte des Lagers 11 gespritzt, was jedoch im Zusammenhang mit vorliegender Anmeldung unbeachtlich ist. Man hat im wesentlichen mit dem in axialer Richtung von den Rillen 17 und Kugeln 19 nach aussen spritzenden Oel zu tun. Dieses fällt auf den Schleuderring 22 und auf die Fläche 25. Als Folge der Rotation des Rings 22 fliesst das auf diesen auftreffende Oel zur aktiven Kante 23 und wird von der letztern auf die Auftreffläche 25 geschleudert. Diese wird in diesem Beispiel durch die Oberfläche des in axialer Richtung ausserhalb der Kugeln 19 liegenden Teils des Käfigs 20 gebildet. Als Folge der sich in axialer Richtung konisch nach dem Innern des Rotationslagers 11 öffnenden Form der Fläche 25, des Bestrebens des Oels, an dieser Fläche 25 zu haften und der durch die Rotation der letztern vorhandenen zentrifugalen Kräfte, wird das auf die Fläche 25 auftreffende Oel zu den Kugeln 19 zurückbefördert. Die Auftrefffläche 25 bildet somit eine Rückführung für das Oel.

Wären die Schleuderringe 22, wie dies bei bekannten Einrichtungen der Fall ist, nicht vorgesehen, so würde eine relativ grosse Menge Oel zu den Deckscheiben 21 hin fliegen. Da deren Dichtung mit der Welle 22 stets eine gewisse Durchlässigkeit aufweist, so hätte man in einem solchen Fall stets einen gewissen Oelverlust. Dank des Schleuderrings 22 wird dem Oel praktisch die Möglichkeit genommen, überhaupt zu den Deckscheiben 21 hin zu gelangen.

Bei stillstehendem Rotationslager 11 sammelt sich das Oel im untern Teil desselben und bildet einen sogenannten "Sumpf". Solange dessen Obergrenze sich unterhalb der un-tersten Partie der Welle 14 befindet, sind im Ruhezustand Oelverluste vollständig vermieden. Dies ist der Fall, weil zwischen Scheibe 21 und Welle 14 nichts austreten kann, da die Befestigungsstelle der Scheibe 21 mit dem Aussenring 18 absolut dicht hergestellt werden kann. Für ein auch im Ruhezustand dichtes Rotationslager 11 ist somit eine im montierten Zustand horizontale Anordnung desselben notwendig.

Das Lager 11 erfährt im Betrieb eine Erwärmung. Bei der Verwendung eines Fettes an Stelle von Oel als Schmiermittel, wird dieses flüssig, sodass die im Vorhergehenden gemachten Ausführungen sowohl für Oel als auch für Fette gültig sind.

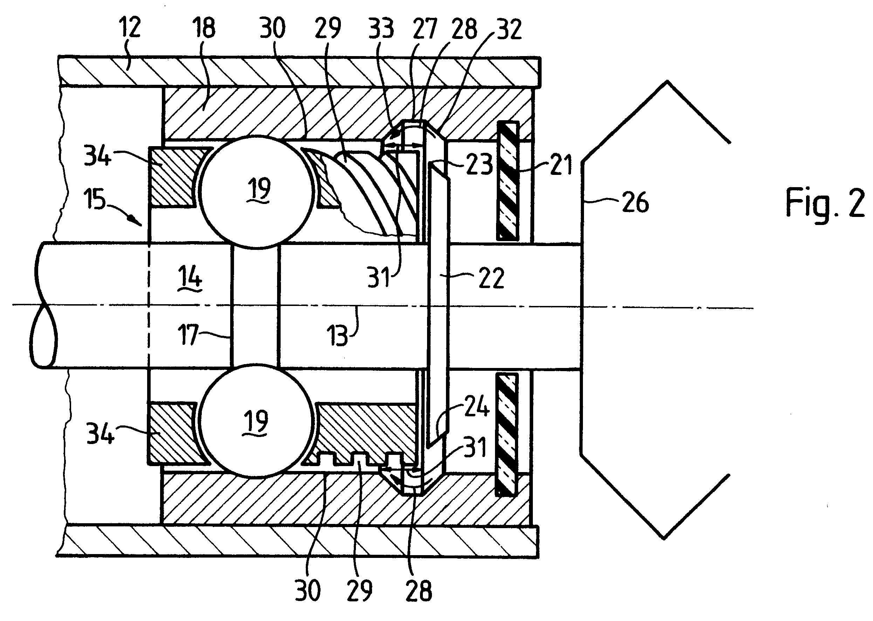

Die Figur 2 zeigt das eine Ende einer andern Ausführungsform eines Rotationslagers. Dieses weist wiederum ein Gehäuse 12 und eine um eine Rotationsachse 13 rotierbare Welle 14 auf, in welcher eine der eingebauten Rillen 17 sichtbar ist. Diese bildet wiederum den Innenring eines Radial-Wälzlagers 15, welches zusätzlich einen Aussenring 18 und in einem Käfig 34 geführte, als Kugeln 19 ausgebildete Wälzkörper umfasst. Eine Deckscheibe 21 verhindert wiederum das Eindringen von Schmutz von aussen und das Entweichen von Schmiermittel aus dem Innenraum des Rotationslagers. Ein bei der Verwendung des letzteren beim Offenend-Spinnen mit hoher Geschwindigkeit rotierender Rotor 26 ist an einem Ende der Welle 14 befestigt. Ein Schleuderring 22 ist wiederum fest auf der Welle 14 montiert.

Im weiteren ist eine im Betrieb stillstehende Umlenkrille 27 vorhanden. Diese dient dazu, das vom Schleuderring 22 wegfliegende Schmiermittel im durch die Pfeile 28 angegebenen Sinn umzuleiten. Die Rille 27 weist eine sich gegen ihre Bodenpartie hin verengende Form, und damit zwei schräg angeordnete Seitenwände 32, 33 auf. Sie ist im gezeigten Beispiel im Aussenring 18 eingebaut. Die vom Wälzlager 15 abgewandte Seitenwand 32 der Rille 27 befindet sich in Deckung mit der aktiven Kante 23 des Schleuderringes 22. Die Rille 27 bildet für das Schmiermittel eine Rückführung zu den Kugeln 19.

Der Käfig 34 weist auf seiner der Welle 14 abgewandten Oberfläche und in seinem in axialer Richtung sich ausserhalb der Wälzkörper 19 befindlichen Bereich spiralförmig gegen die Wälzkörper 19 hin verlaufende Nuten 29 auf. Mit kleinem Abstand von der gesamten Oberfläche, unmittelbar über den Nuten 29, befindet sich eine durch den Aussenring 18 gebildete Deckfläche 30. Diese bedeckt den den Wälzkörpern 19 benachbarten, ausserhalb den Kugeln 19 liegenden Bereich des Käfigs 34, mit Ausnahme des von den Kugeln 19 entferntesten, sich über die axiale Erstreckung 31 erstreckenden Bereichs. Ueber dem letzteren befindet sich die in radialer Richtung den Kugeln 19 zugewandte Seite 33 der Rille 27.

Im Betrieb eines gemäss Figur 2 konstruierten Rotationslagers wird das sich im Innern desselben befindliche Schmiermittel wiederum heftig bewegt. Insbesondere das von den rollenden Wälzkörpern 19 nach aussen spritzende Oel muss bei den heute bekannten Einrichtungen durch die Deckscheibe 21 zurückgehalten werden, was, wie bereits erwähnt, nur in ungenügendem Mass der Fall ist, da die schleifende Auflage der Deckscheibe 21 auf der Welle 14 immer etwas durchlässig ist. Im Gegensatz dazu kann der rring 22, da er mit der Welle 14 mitrotiert, vollkommen dicht montiert werden, sodass bei der erfindungsgemässen Ausführungsform alles sich in axialer Richtung nach aussen bewegende Oel vom Schleuderring 22 erfasst wird. Von diesen wird es gegen die Rille 27 geschleudert und, wie durch die Pfeile 28 angedeutet, umgelenkt. Damit diese Umlenkung eintritt, ist es notwendig, dass die vom Wälzlager abgewandte Seitenwand 32 der Umlenkrille 27 sich mit der aktiven Kante 23 des Rings 22 in Deckung befindet. Diese Seitenwand 32 ist im gezeigten Beispiel in axialer Richtung gegen die Mitte des Rotationslagers hin sich konisch erweiternd geformt.

Die andere Seitenwand 33 der Rille besitzt eine gegen die Mitte des Rotationslagers hin konisch verjüngte Form. Diese befindet sich mit dem, mit Nuten 29 versehenen, von den Kugeln 19 entferntesten und von der Deckfläche 30 nicht bedeckten Bereich in Deckung. Das von der Seitenwand 33 hineinlaufende Oel fliesst somit auf diesen von den Kugeln 19 entferntesten und von der Deckfläche 30 nicht bedeckten Bereich des Käfigs 20. Dieser rotiert um die Achse 13 herum. Wie aus dem als Ansicht gezeichneten Ausschnitt des in Figur 2 rechts oben befindlichen Teilstücks des Käfigs 34 ersichtlich ist, verlaufen in diesem Teilstück die Nuten von vorn nach hinten schräg gegen die Kugeln 19 hin. In der Annahme einer Drehrichtung des Käfigs 34 in einer Weise, bei welcher sich die im Ausschnitt sichtbaren Nuten 29 für den Betrachter von hinten nach vorn bewegen, gelangt das an dieser Stelle über der Axialerstreckung 31 auftropfende Oel in die Nuten 29 hinein und wird als Folge der Rotation des Käfigs 34 zu den Kugeln 19 hin bewegt. Der Abstand zwischen der äussern Mantelfläche des Käfigs 34 und der Deckfläche 30 ist in Fig. 2 zu gross gezeichnet, er ist in Wirklichkeit sehr klein. Daher wird Oel in der Art und Weise einer Schraubenpumpe dauernd durch die Nuten 29 gegen die Kugeln 19 bewegt. Insbesondere als Folge dieses kleinen Abstands kann kein Oel zwischen der äussern Mantelfläche des Käfigs 34 und der Deckfläche 30 nach aussen fliessen und wegen des praktisch vollständigen Abfangens allen Oels durch den Ring 22 vermittelt die erfindungsgemässe Anordnung nach Fig. 2 einen praktisch öldichten Abschluss.

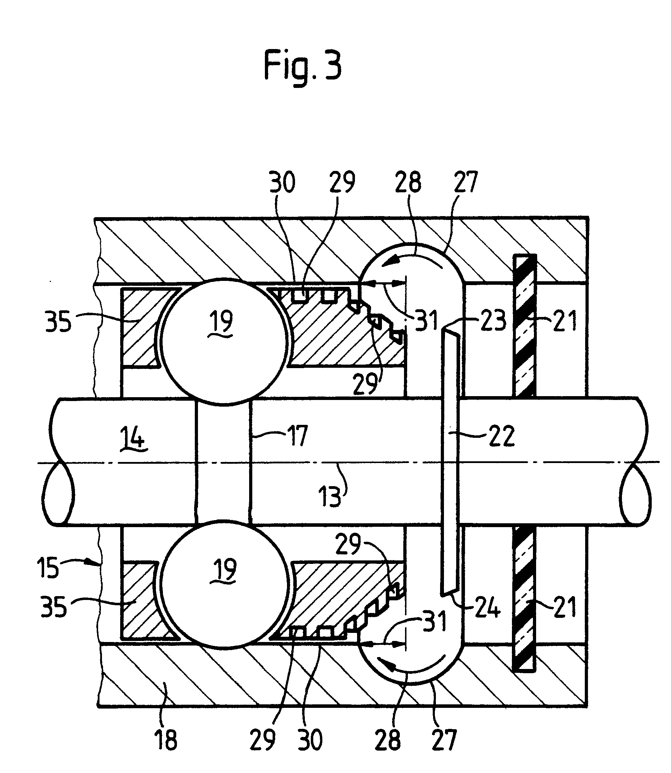

Fig. 3 dient zur Illustrierung einer gegenüber der in Fig. 2 gezeigten Ausführungsform etwas verschiedene Anordnung. Diese besitzt wiederum eine um eine Achse 13 rotierbare Welle 14. Ein Radial-Wälzlager 15 ist wiederum das am rechten Ende eines Rotationslagers befindliche Lager für eine Welle 14. Die als Kugeln 19 ausgebildeten Wälzkörper sind durch eine Rille 17 und einen stillstehenden Aussenring 18 geführt. Eine Deckscheibe 21 dient zum Verhindern des Eindringens von Fremdkörpern von aussen und des Ausfliessens von Schmiermittel nach aussen. Ein Schleuderring 22 mit einer aktiven Kante 23 ist wieder fest auf der Welle 14 montiert. Im Aussenring 18 ist wiederum eine für das Schmiermittel als Rückführung zu den Kugeln 19 dienende Umlenkrille 27 vorgesehen, durch welche vom Ring 22 weggeschleudertes Schmiermittel im durch die Pfeile 28 angezeigten Sinn umgelenkt wird. Auf der äussern Mantelfläche eines Käfigs 35 sind wiederum Nuten 29 vorhanden, die spiralförmig gegen die Kugeln 19 hin verlaufen. Zum Zweck des Abdeckens der Nuten 29 ist mit kleinem Abstand von denselben eine Deckfläche 30 vorgesehen.

Im Unterschied zum Ausführungsbeispiel der Fig. 2 ist der von den Kugeln 19 entfernteste, von der Deckfläche 30 nicht mehr überdeckte und sich über der Axialerstrekkung 31 befindliche Bereich des Käfigs 35 in axialer Richtung konisch verengend ausgebildet.

Zur Erläuterung der Arbeitsweise dieser Ausgestaltung sei wiederum vorausgesetzt, dass in bezug auf die obere Hälfte der Fig. 3 die Nuten 29 nach hinten spiralförmig gegen die Kugeln 19 verlaufen und sich bei ihrer Rotation auf den Betrachter zu bewegen. Fliesst unter diesen Umständen Oel von der stillstehenden Umlenkrille 27 in die rotierenden Nuten 29, so wird es, bis es die volle Rotationsgeschwindigkeit erreicht hat, von der Nute 29 nach innen bewegt. Dabei nimmt es bereits in der Nute 29 befindliches Oel ebenfalls längs derselben im Sinne einer weiteren Annäherung desselben zu den Kugeln 19 mit sich. Dieser Vorgang entspricht dem bereits im Beispiel der Fig. 2 stattfindenden Vorgang. Dazu kommt nun noch, dass als Folge der konischen Ausbildung des Käfigs 35 die Nuten 29 gegen die Kugeln 19 hin ansteigend sind, d.h., dass ihr Abstand von der Rotationsachse 13 zunimmt. Da das Oel wegen kapillarer Kräfte bestrebt ist, an den Nuten 29 zu haften, so wird es zusätzlich durch die durch die Rotation des Käfigs 35 bedingten zentrifugalen Kräfte nach aussen und damit wiederum längs den Nuten 29 gegen die Kugeln 29 getrieben. Der sehr kleine Zwischenraum zwischen den Nuten 29 und der Deckfläche 30 bewirkt, dass das Oel, sobald es in die sich unter der Deckfläche 30 befindlichen Nutenbereiche gelangt, aus diesen nicht mehr austreten kann und somit gegen die Kugeln 19 getrieben wird.

**Patentansprüche**

1. Rotationslager (11) für hohe Drehzahlen und in, im montierten Zustand, horizontaler Anordnung, mit einer in einem Gehäuse (12) um eine Rotationsachse (13) rotierbaren Welle (14), welche in zwei Radial-Wälzlagern (15,16) gelagert ist, von denen jedes von je einem Käfig (20,34,35) geführte Wälzkörper (19) und einen durch eine auf der Welle (14) angebrachte Rille (17) gebildeten Innenraum umfasst, wobei an jedem Ende des Gehäuses (12) je eine Deckscheibe (21) angebracht ist und im Innern des Gehäuses (12) zwischen den zwei Wälzlagern (15,16) ein Schmiermittelvorrat vorhanden ist, dadurch gekennzeichnet, dass sich bei jedem Wälzlager (15,16) zwischen dem Wälzkörper (19) und der Deckscheibe (21) ein auf der Welle (14) aufgebauter, eine aktive Kante (23) aufweisender Schleuderring (22) für das Schmiermittel befindet, dass eine die aktive Kante (23) konzentrisch umschliessende Auftrefffläche (25,27) vorgesehen ist, die derart mit dem Schleuderring (22) zusammenwirkt, dass das Schmiermittel, welches einem bestimmten Wälzlager (15,16) zugehört, von der aktiven Kante des Schleuderrings (22) weggeschleudert, von der Auftrefffläche aufgefangen und wieder dem zugehörigen Wälzlager (15,16) zugeführt wird, und dass der Käfig (20,34,35) in der Weise geformt ist, dass er im Betrieb durch seine Bewegung die weitere Förderung des von der Auftrefffläche aufgefangenen Schmiermittels zu den Wälzkörpern (19) hin bewirkt.

2. Rotationslager nach Patentanspruch 1, dadurch gekennzeichnet, dass die den Schleuderring (22) konzentrisch umschliessende Aussenfläche (25) durch den Käfig (20) selbst gebildet ist, wobei sich dessen dem Schleuderring (22) zugekehrte Seite bis zu den Wälzkörpern (19) hin erstreckt und die Auftrefffläche (25), in axialer Richtung, gegen die Wälzkörper (19) hin sich konisch erweiternd geformt ist.

3. Rotationslager nach Patentanspruch 1, dadurch gekennzeichnet, dass die Auftrefffläche (27) eine mit der aktiven Kante (23) koaxiale Umlenkrille (27) umfasst, welche gegen diese aktive Kante (23) hin offen ist, sich gegen ihre Bodenpartie hin verengt und damit schräg angeordnete Seitenwände (32, 33) umfasst, und dass die dem Wälzlager (15) abgewandte Seitenwand (32) der Umlenkrille (27) sich mit der aktiven Kante (23) in Deckung befindet, und dass die dem Wälzlager (15) zugewandte Seitenwand (33) der Umlenkrille (27) den Käfig (34, 35) umschliesst und so für das Schmiermittel eine zum Käfig (34, 35) hin führende Rückführung bildet.

4. Rotationslager nach Patentanspruch 3, dadurch gekennzeichnet, dass der Käfig (34, 35) auf seiner von der Welle (14) abgewandten Seite (32) und in seinem in axialer Richtung sich ausserhalb der Wälzkörper (19) befindlichen Bereich spiralförmig gegen die Wälzkörper (19) hin verlaufende Nuten (29) aufweist, und sich über diesem Bereich, mit Ausnahme des von den Wälzkörpern (19) entferntesten Teils (31) desselben, eine sich mit minimalem Abstand unmittelbar über diesem Bereich erstreckende Deckfläche (30) befindet.

5. Rotationslager nach Patentanspruch 4,
dadurch gekennzeichnet,
dass die Umlenkrille (27) und die sich unmittelbar über den Nuten (29) erstreckende Deckfläche (30) durch den Aussenring (18) des Wälzlagers (15) gebildet sind.

6. Rotationslager nach Patentanspruch 4,
dadurch gekennzeichnet,
dass der in axialer Richtung von den Wälzkörpern (19) entfernteste und von der Deckfläche (30) nicht bedeckte Teil (31) des Käfigs (35) in axialer Richtung bezüglich des Rotationslagers nach aussen sich konisch verengend ausgebildet ist.

7. Rotationslager nach Patentanspruch 1,
dadurch gekennzeichnet,
dass der Schleuderring (22) die Form einer kreisringförmigen Scheibe mit einer kegelstumpfförmigen Mantelfläche (24) besitzt.

## Claims

1. Rotational bearing (11) for high speeds and with a horizontal arrangement in its assembled state, having a shaft (14) which is rotatable in a housing (12) about an axis of rotation (13) and is supported in two radial rolling bearings (15, 16), each of which comprises rolling members (19) guided by a cage (20, 34, 35) and an inner chamber formed by a groove (17) provided on the shaft (14), with a cover disk (21) being mounted on each end of the housing (12) and a lubricant supply being provided inside the housing (12) between the two rolling bearings (15, 16), characterised in that in each rolling bearing (15, 16) a lubricant slinger ring (22) fitted on the shaft (14) and having an active edge (23) is situated between the rolling member (19) and the cover disk (21), that there is provided concentrically surrounding the active edge (23) an impact surface (25, 27) which cooperates with the slinger ring (22) in such a way that the lubricant associated with a specific rolling bearing (15, 16) is hurled away by the active edge of the slinger ring (22), is collected by the impact surface and is resupplied to the associated rolling bearing (15, 16), and that the cage (20, 34, 35) is shaped in such a way that during operation it serves through its movement to convey the lubricant collected by the impact surface further towards the rolling members (19).

2. Rotational bearing according to patent claim 1, characterised in that the outer surface (25) concentrically surrounding the slinger ring (22) is formed by the cage (20) itself, with the side of the cage facing the slinger ring (22) extending as far as the rolling members (19) and with the impact surface (25) being shaped so as to widen conically in an axial direction towards the rolling members (19).

3. Rotational bearing according to patent claim 1 characterised in that the impact surface (27) comprises a deflection groove (27) which is coaxial to the active edge (23), is open towards said active edge (23), narrows towards its base and hence has obliquely disposed side walls (32, 33), and that the side wall (32) of the deflection groove (27) remote from the rolling bearing (15) is aligned with the active edge (23), and that the side wall (33) of the deflection groove (27) facing the rolling bearing (15) surrounds the cage (34, 35) and hence forms a system for feeding the lubricant back towards the cage (34, 35).

4. Rotational bearing according to patent claim 3, characterised in that the cage (34, 35) has, on its side (32) remote from the shaft (14) and in its region lying axially outside of the rolling members (19), grooves (29) which extend helically towards the rolling members (19), and over said region, with the exception of its part (31) most remote from the rolling members (19), there is a cover surface (30) extending at a minimal distance directly above said region.

5. Rotational bearing according to patent claim 4, characterised in that the deflection groove (27) and the cover surface (30) extending directly above the grooves (29) are formed by the outer ring (18) of the rolling bearing (15).

6. Rotational bearing according to patent claim 4, characterised in that the part (31) of the cage (35), which is axially most remote from the rolling members (19) and is not covered by the cover surface (30), is constructed so as to taper outwards in an axial direction relative to the rotational bearing.

7. Rotational bearing according to patent claim 1, characterised in that the slinger ring (22) is in the form of an annular disk having a truncated cone-shaped surface area (24).

## Revendications

1. Palier à rotation (11) pour de grands nombres de tours qui, dans son état monté en disposition horizontale, comprend un arbre (14) maintenu dans un carter (12) et pouvant tourner autour d'un axe de rotation (13), et qui est maintenu par deux paliers à roulement radial (15, 16) dont chacun comprend des corps de roulement (19) guidé chacun dans une cage (20, 34, 35) et un espace intérieur formé par une gorge (17) disposée sur l'arbre (14), et dans lequel un disque de recouvrement (21) est disposé à chaque extrémité du carter (12) et une réserve de moyen lubrifiant est emmagasinée à l'intérieur du carter (12) entre les deux paliers à roulement (15, 16),

   caractérisé par le fait
   que, dans chaque palier à roulement (15, 16), se trouve un anneau centrifugeur (22) de moyen lubrifiant, comprenant une arête active (23), et qui est monté sur l'arbre (14), entre le corps de roulement (19) et le disque de recouvrement (21), qu'une surface de choc (25, 27) est prévue entourant concentriquement l'arête active (23) agissant conjointement avec l'anneau centrifugeur (22) de telle sorte que le moyen lubrifiant, appartenant à un palier à roulement déterminé (15, 16), est centrifugé depuis l'arête active de l'anneau centrifugeur (22), est collecté par la surface de choc, et est à nouveau dirigé vers le palier à roulement (15, 16) y appartenant, et que la cage (20, 34, 35) est formée de façon à ce que, pendant la marche et par son mouvement, elle provoque le transport ultérieur du moyen lubrifiant collecté par la surface de choc vers les corps de roulement (19).

2. Palier à rotation selon revendication 1,

   caractérisé par le fait
   que la surface extérieure (25), entourant concentriquement l'anneau centrifugeur (22), est formée par la cage (20) même, et où le côté de celle-ci opposé à l'anneau centrifugeur (22) s'étend jusque vers les corps de roulement (19), et la surface de choc (25) est formée en s'élargissant d'une manière conique, dans le sens axial, vers les corps de roulement (19).

3. Palier à rotation selon revendication 1,

   caractérisé par le fait
   que la surface de choc (27) comprend une gorge de déviation (27), coaxiale avec l'arête active (23), gorge qui est ouverte face à cette arête active (23), se rapetisse vers sa partie de fond et comporte ainsi des parois latérales (32, 33) disposées en biais, et que la paroi latérale (32) de la gorge de déviation (27) la plus éloignée du palier à roulement (15) se trouve en recouvrement avec l'arête active (23), et que la paroi latérale (33) de la gorge de déviation (27) faisant face au palier à roulement (15) entoure la cage (34, 35) et forme ainsi un recyclage guidant le moyen lubrifiant en retour vers la cage (34, 35).

4. Palier à rotation selon revendication 3,

   caractérisé par le fait
   que la cage (34, 35), sur sa paroi latérale (32) éloignée de l'arbre (14) et dans sa zone située en dehors des corps de roulement (19), dans le sens axial, possède des rainures (29) se déroulant en forme de spirale vers les corps de roulement (19), et que, au-dessus de cette zone, à l'exception de la partie (31) la plus éloignée des corps de roulement (19) de celle-ci, se trouve une surface de recouvrement (30) s'étendant à une distance minimale immédiatement au-dessus de cette zone.

5. Palier à rotation selon revendication 4,

   caractérisé par le fait
   que la gorge de déviation (27) et la surface de recouvrement (30) s'étendant immédiatement au-dessus des rainures (29) sont formées par la bague extérieure (18) du palier à roulement (15).

6. Palier à rotation selon revendication 4,

   caractérisé par le fait
   que la partie (31) de la cage (35) la plus éloignée des corps de roulement (19) dans le sens axial et qui n'est pas recouverte par la surface de recouvrement (30), est formée en se rétrécissant d'une manière conique vers l'extérieur dans le sens axial par rapport au palier à rotation.

7. Palier à rotation selon revendication 1,

   caractérisé par le fait
   que l'anneau centrifugeur (22) possède la forme d'un disque circulaire ayant une surface d'enveloppe (24) de forme de cône tronqué.

Fig. 1

Fig. 2

# Fig. 3